# EUROPEAN PATENT APPLICATION

(11) **EP 1 282 249 A2**
(43) Date of publication of application: **05.02.2003**
(21) Application number: 02291740.5
(22) Date of filing: 11.07.2002
(51) Int. Cl.: H04J 3/08, H04J 3/14

(54) **Method of managing different type multiple failures in ring topology telecommunication networks**

(30) Priority: 31.07.2001 IT MI20011657
(71) Applicant: ALCATEL, 75008 Paris (FR)
(72) Inventor: Manganini, Andrea, 20058 Villasanta (Milano) (IT); Casazza, Elena, 24045 Fara Gera d'Adda (Bergamo) (IT)
(74) Representative: Colombo, Stefano Paolo

(57) **Abstract**

Described is a method of managing multiple failures of different type in telecommunication networks having a ring topology, in particular transoceanic four-fiber MS-SPRING rings. The method is characterized by comprising the step, implemented before realizing the ring type protection, of checking that the necessary low priority channels for the implementation of the ring type protection are available, namely they are not already utilized for performing another protection; in the negative case, it is foreseen the implementation of no ring type protection to prevent the unuseful loss of low priority channels. In case of multiple failures of different type, namely of ring and span types, in the path, the method provides for implementing a ring type protection.

## Description

The present invention relates to the field of telecommunication ring networks and in particular to four-fiber ring topology networks where the traffic is protected by a shared MS-SPRING type mechanism. Still more in particular, it concerns how to manage possible scenarios of multiple failures of different type in such networks.

In the telecommunications field, the optical fiber networks with a ring topology comprising a certain number of network nodes or elements interconnected by fiber spans in order to form a ring are known. The traffic in such networks is carried along the so-called paths, namelly circuits interconnecting two or more ring network elements.

Furthermore, mechanisms for protecting traffic in such networks are also known. Among these, the shared mechanism termed MS-SPRING (Multiplexed-Shared Protection Ring) is higly used.

In the SDH transoceanic communication networks with a four-fiber ring topology, wherein the protection is of the MS-SPRING type, the available band is divided into two-parts: the high priority channels (to be protected in case of failure of the ring) and the low priority channels (which are not protected and, in case of failure, are squelched). Along the transmission direction, two adjacent nodes are interconnected by four fibers (two fibers in a direction and two in the opposite one); in absence of failures, the high priority channels (indicated by the HP sign) occupy the working fiber, while the low priority channels (LP) occupy the protection fiber, till this is not required to perform ring protections.

In such networks, a span failure is defined as the break (or degradation) of one of, or both, the working fibers interconnecting two nodes, or of one of, or both, the protecting fibers; in the first case (working fibers involved in the break) the span type protection forecasts that the whole HP traffic be recovered by re-routing it onto the protection fiber of the same span. A ring failure is defined as the break (or degradation) of both the working fiber and the protection fiber between two adjacent nodes. In such a case, it is foreseen a ring type protection, which provides for re-routing the HP traffic, which is lost due to the break, in the direction opposite to the failure by utilizing the LP channels.

The common problem of all the protection mechanisms consists in protecting and saving as much as HP traffic is possible.

The ring topology guarantees that, in case of a single failure, all the high priority traffic is restored. Nevertheless, the situation becomes critical when multiple failures are present in the ring: in order to maximize the protected traffic, each node should report all the failures and the local commands, in order to notify its requests to the whole ring.

The management of protection for ring networks is standardized by the International Organisms ITU (Recommendation ITU-T G.841, Annex A) and ETSI. In both the Standards, the protection protocol is based upon a pair of bytes K1, K2 of the SDH (or SONET) frame, and in particular of its MSOH section.

In the case of ring protection, all the nodes act directly, so that the signaling can travel around the whole ring, and possibly implement some actions upon the traffic. A necessary condition for the management of the ring protection is that the signaling arrives at all the nodes (signaling on the long path) which will be set in a pass-through state (only the termination nodes will be in a Bridge & Switch status).

On the contrary, in case a span protection is implemented, it is not necessary that the signaling arrives at all the nodes: the only nodes involved in the protection are those adjacent to the span affected by the span failure. In such a case the span protection is managed by the signaling on the short path.

A status code synchronizes the actions to be undertaken in order to avoid flow misconnections.

The ITU-T G. 841 Recommendation foresees that more span or ring type requests are served in the same time on the ring, but there are no provisions for managing ring and span requests at the same time; in such a case, the traffic which passes through the span affected by a span failure is protected, but not the traffic which passes through the ring failure (the ring protection, if any, is eliminated).

While the solution suggested by the Recommendation is rather effective, it does not maximize the high priority traffic protection in case of different type failures (span and ring failures). In fact, according to the traffic distribution in the ring network, it is possible to classify the different HP traffic flows into four different categories: a) HP flows which do not pass through any of the failures; b) HP flows which pass through only a failure of span type; c) HP flows which pass through only a failure of ring type; and d) HP flows which pass through both the failures (ring and span). Clearly, only the HP flows of a) and b) types are guaranteed; the HP flows of c) type are not protected, because they pass through the ring failure; the HP flows of d) type are protected in the span wherein the span protection is performed but they become lost at the point where they pass through the ring failure. In other words, there are some cases wherein LP flows are eliminated in order to protect HP flows which nevertheless can not arrive to destination.

In view of the inconveniences and and shortcomings of the above described known and standardized solutions, the main object of the present invention is providing a method of managing multiple failures of different types (ring and span failures) in transoceanic telecommunications networks having a ring topology. In particular, the object of the present invention is to provide a method for the automatic protection of a ring network which could save as much as HP traffic is possible.

This and further objects are obtained through a method having the features shown in the independent claim 1, through a network element according to claim 6 and a ring network according to claim 10. Further advantageous characteristics are set forth in the respective dependent claims.

The basic idea of the present invention consists in implementing a coexistence, in the ring network, of ring and span protections and in individually handling each HP flow. In particular, for the flows of a) type, no protection shall be implemented; for the flows of b) type, the span protection shall be implemented; for the flows of d) type, the ring protection shall be implemented; finally, for the flows of c) type, the ring protection is implemented only if there are available resources (band), namely if the corresponding LP flow is not utilized for implementing a span protection.

Through the present invention, the recovery of the HP traffic is higher than in the known mechanisms. Furthermore, the mechanism according to the present invention maintains the priority between span and ring protections, as suggested by the mentioned Recommendations.

The invention will certainly become clear in view of the following detailed description, given by way of a mere non limiting and exemplifying example, to be read with reference to the attached figures, wherein:
- Fig. 1.1 illustrates in a schematic way a four-fiber telecommunications network with a ring topology free of failures and with two installed paths;
- Fig. 1.2 illustrates the same network of Fig. 1.1 with two different installed paths;
- Fig. 2.1 illustrates the same network of Fig. 1.1 affected by two failures and how the path affected by a double failure is unprofitably re-routed;
- Fig. 2.2 illustrates the same network of 1.2 and how it is unpossible to save a path affected by a ring failure when there is another span failure in the ring;
- Fig. 3 illustrates the various steps of the method according to the invention, implemented for each path;
- Fig. 4.1 illustrates the same network of Fig. 1.1 as affected by two failures and how, according to the present invention, the path affected by a double failure is profitably re-routed;
- Fig. 4.2.1 illustrates the same network of Fig. 1.2 and how, according to the present invention, a path affected by a ring failure can be saved also in the presence of another span failure in the ring, while on a different band;
- Fig. 4.2.2 illustrates the same network of Fig. 1.2 and how, according to the present invention, a path affected by a ring failure can not be saved in the presence of another span failure in the ring and without available LP resources; and
- Figs. 5 and 6 show fish-bone graphs which illustrate the protection mechanisms in case of a single failure (span or ring) followed by a further failure (ring or span) of a different type.

Before describing the present invention in the detail, it is considered useful to mention that it is equally applicable to each type of synchronous transmission, typically SDH and SONET. Nevertheless, just for clarity reasons, reference has been made only to the SDH field. Therefore, each reference made in this description and in the claims to the synchronous SDH transmissions, has to be understood as including also the SONET transmissions, at least if not specifically indicated.

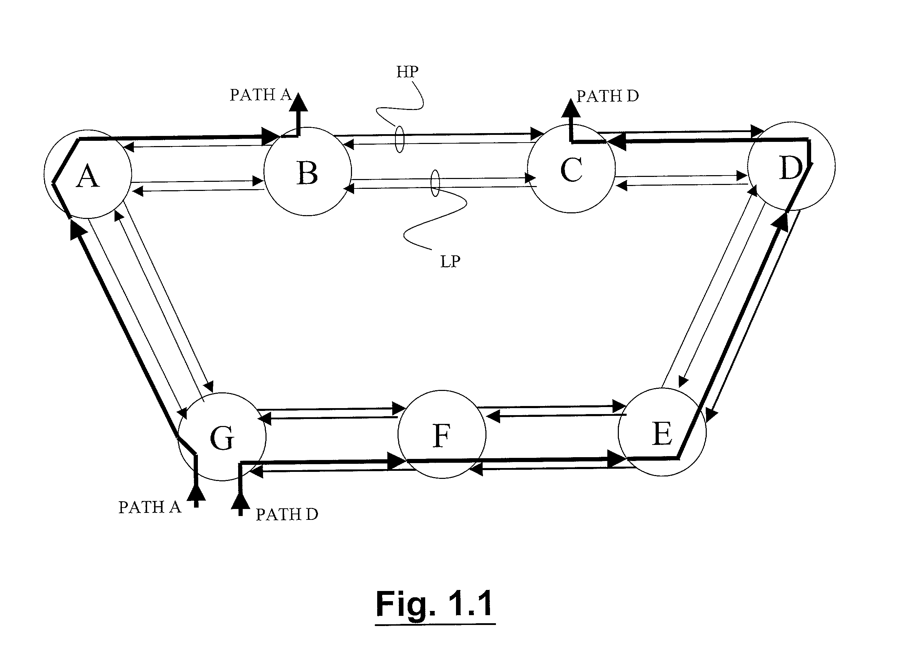

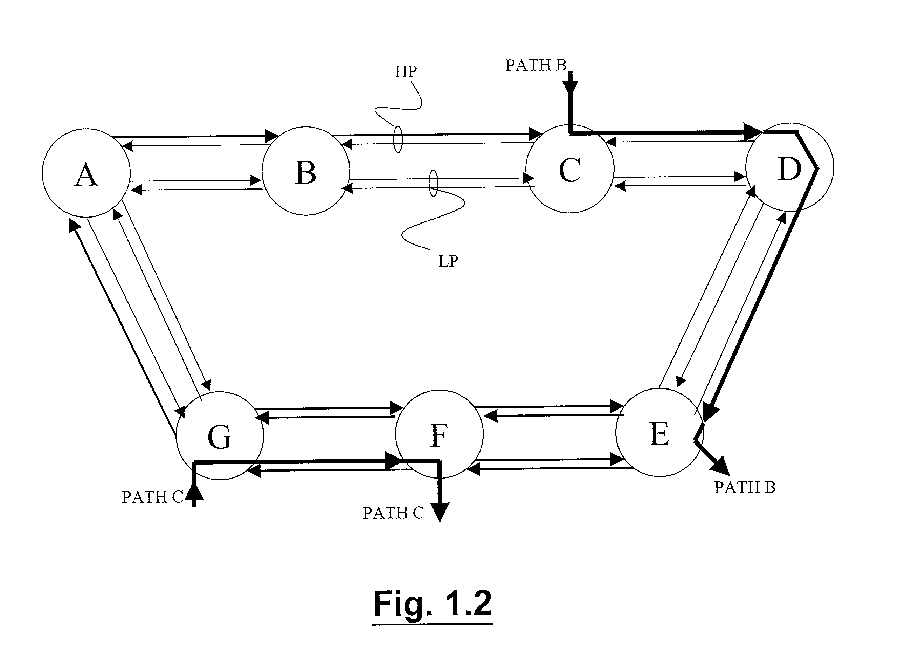

Figures 1.1 e 1.2 show a ring network with a plurality of nodes (A, B, ...G) connected through four-fiber spans that have been schematically illustrated by arrows: a pair of arrows represent the working channels (HP) and the other pair represents the protection channels (LP). Typically, a plurality of protected paths are installed in the ring to bring information from a node to a further node. For clarity reasons, only two paths are illustrated in each Figure. The PATH A in Fig. 1.1 is inserted into the node (or Network Element) G and dropped in the node B; the PATH B of Fig. 1.2 is inserted in the node C and dropped in the node E; the PATH C of Fig. 1.2 is inserted in the node G and dropped in the node F; finally, the PATH D of Fig. 1.1 is inserted in the node G and dropped in the node C.

Each path of the ring network uses proper network resources. In other words, in a SDH ring network protected by a MS-SPRING mechanism, the traffic concerning a path is carried in a STM-n, and therefore into a corresponding AU contained in the STM-n. In principle, it is possible that a flow passes through a network element occupying AU that have different input and output numbers (Time Slot Interchange mechanism).

For clarity purposes, it is assumed that no Time Slot Interchange is present in the ring network utilized to illustrate the present invention, even if the invention principles could be equally applied.

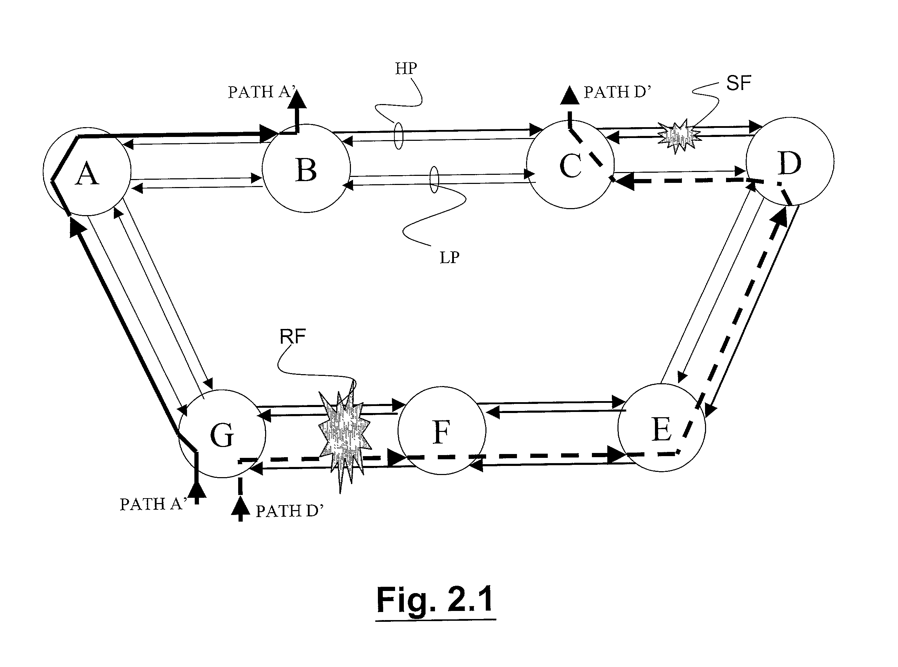

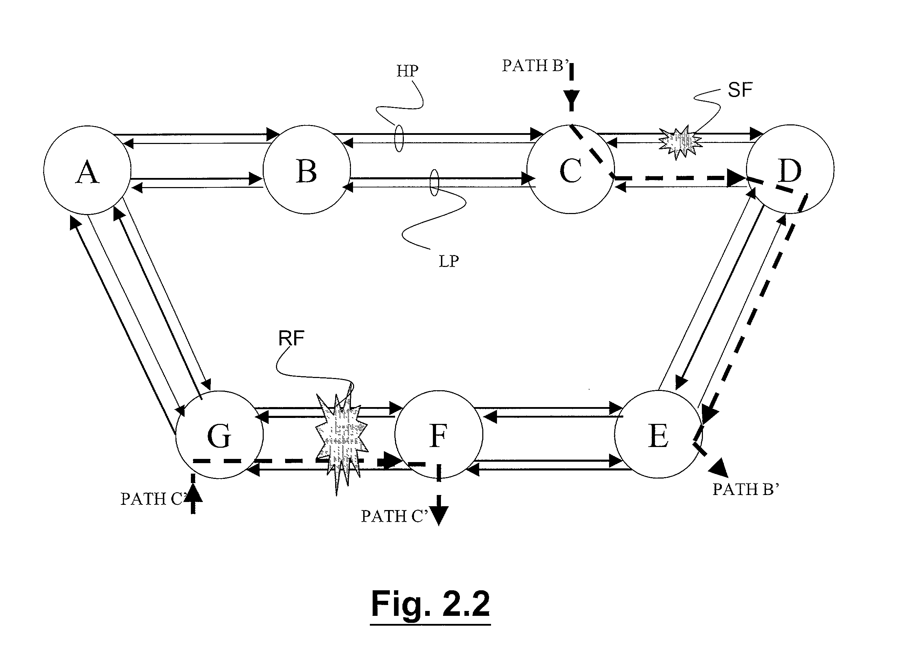

If the network is free of failures, none of the paths is interrupted. In case of a single failure, the MS-SPRING mechanism manages the single failure in a conventional manner and all the HP traffic can be saved. Should multiple failures of different type (i.d. a double failure of span and ring type) occur, the Standards foresees a priority for the span failure (the ring type protection, if already present, should be eliminated). With reference to Figures 2.1 and 2.2, if there is a span failure in the C-D span and a ring failure in the G-F span, the PATHS A and B will be saved (the path A is not subjected to any modification as it does not pass through any failured span); the PATH C can not be protected (as it passes through a ring type failure); and the PATH D is protected in the span wherein the span failure is present, but it is lost in the point where it passes through the ring failure. The evident disadvantage is that LP flows (in the span C-D) are useless eliminated for providing the span protection to HP flows which nevertheless can not arrive at destination.

The basic idea of the present invention consists in individually considering the various paths that are installed in the ring network and in evaluating if they pass through a single (ring or span single failure), a multiple failure of the same type (for instance, a double ring-type failure), a multiple failure of different type (for instance, a ring failure and a span failure) or if they do not pass through any failure.

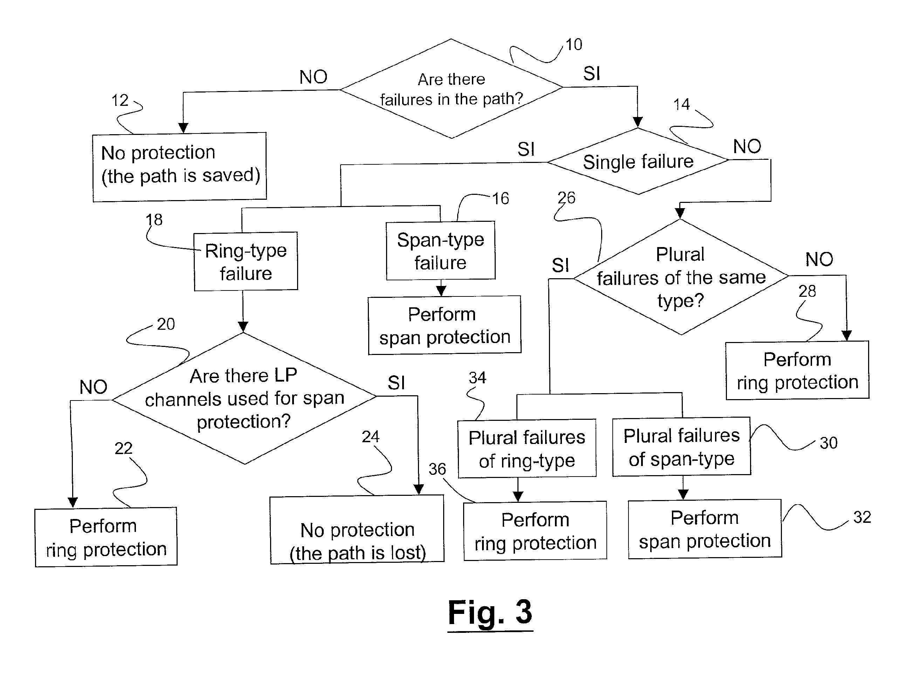

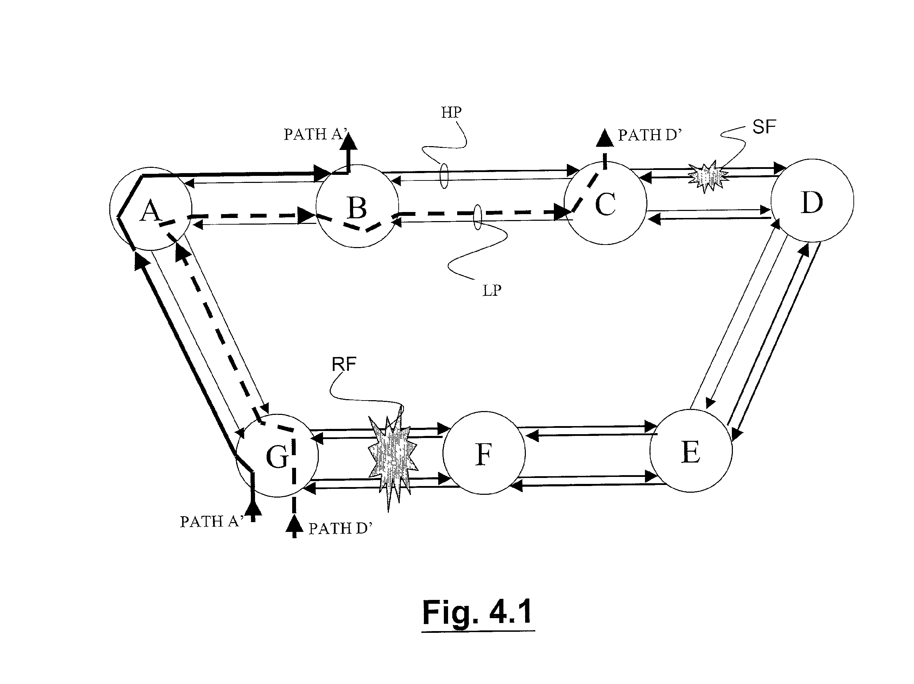

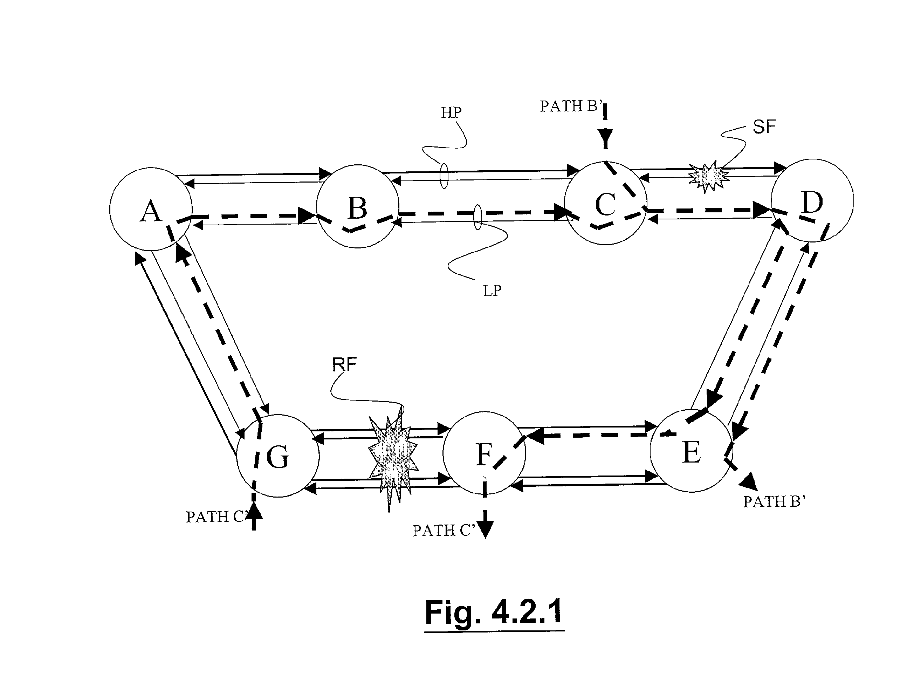

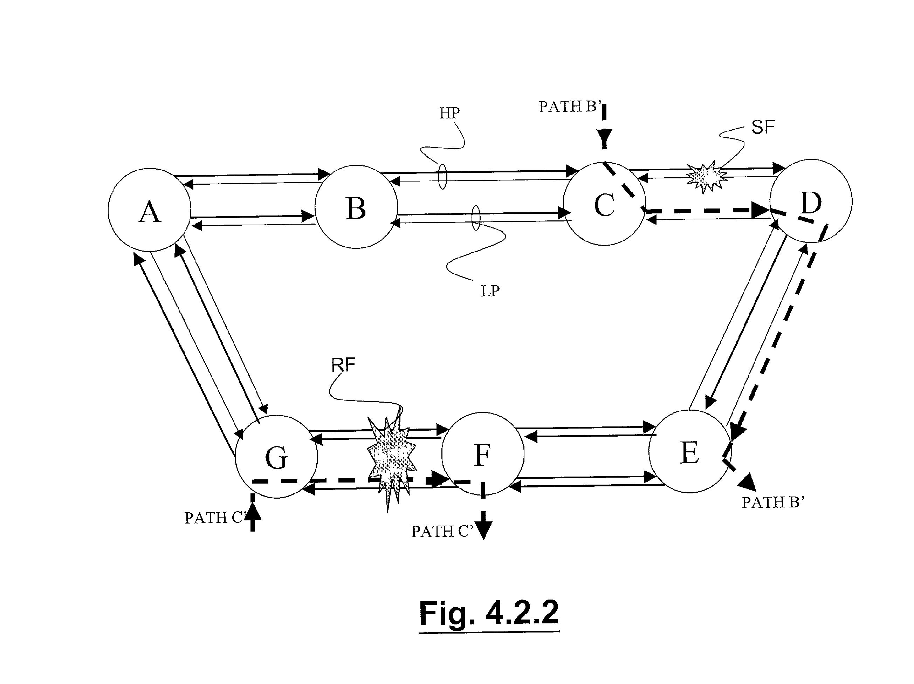

Please refer to the flow chart of Fig. 3 and Figures 4.1, 4.2.1 and 4.2.2. The PATH A does not pass through any failure and therefore, no protection shall be performed on it (the PATH A' coincides with the PATH A). The PATH B passes through a single span type failure and a span protection shall be performed on it, thus obtaining the PATH B'. The PATH D passes through a double failure of different type (a ring failure in the F-G span and a span failure in the C-D span) and a ring protection shall be performed on it, thus obtaining the PATH D'. The PATH C passes through a single ring type failure (in the F-G path) and therefore, it is necessary to check that the LP resources to be utilized for the ring re-routing are not presently utilized for performing a span protection.

Suppose that the PATH C is originally installed on the AU-4#x HP (with x ranging from 1 to n) and the PATH B, at least as the span C-D is concerned, is installled on the AU-4#y HP (y still ranging from 1 to n). If x ≠ y, the ring protection can be implemented for saving the PATH C (Fig. 4.2.1); if x = y, the ring protection can not be performed as the LP channels to be used are indeed utilized for the span protection of the PATH B (Fig. 4.2.2). In case the PATH C can not be saved, the LP channels (possibly utilized for the LP traffic) will not sacrified. The highest priority of a span failure vis-à-vis a ring failure is nevertheless complied with.

In order to implement the method according to the present invention, it is necessary that each node of the ring network be informed about the map of the HP traffic and the map of the LP traffic, as well as about all the failures (and their location) possibly present in the network. In addition, each node shoul havethe possibility to manage the signalings for both the protections. This information allow the node to know which HP flows could be saved and which could not because are not recoverable.

Nevertheless, the signalings interchanged among the nodes and provided by the Standards do not allow to carry information about the two different protections at the same time. It is therefore necessary to modify the communication protocol in order to allow the synchronized evolution of the span switching mechanism (among the nodes adjacent to the span failure) and of the ring switching mechanism for all the ring nodes.

According to the present invention, the signaling has to show at the same time the presence of the span and ring type failures which are present in the ring.

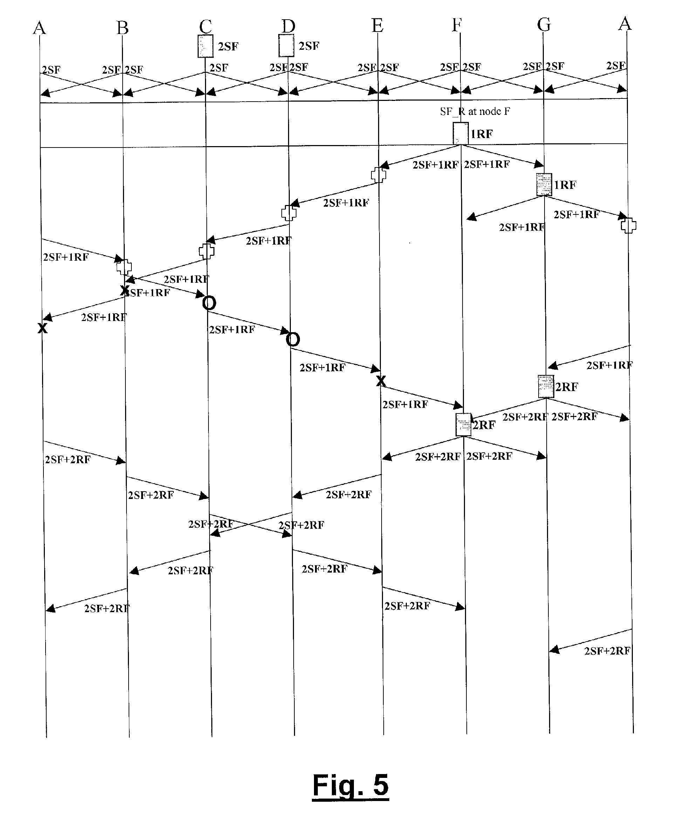

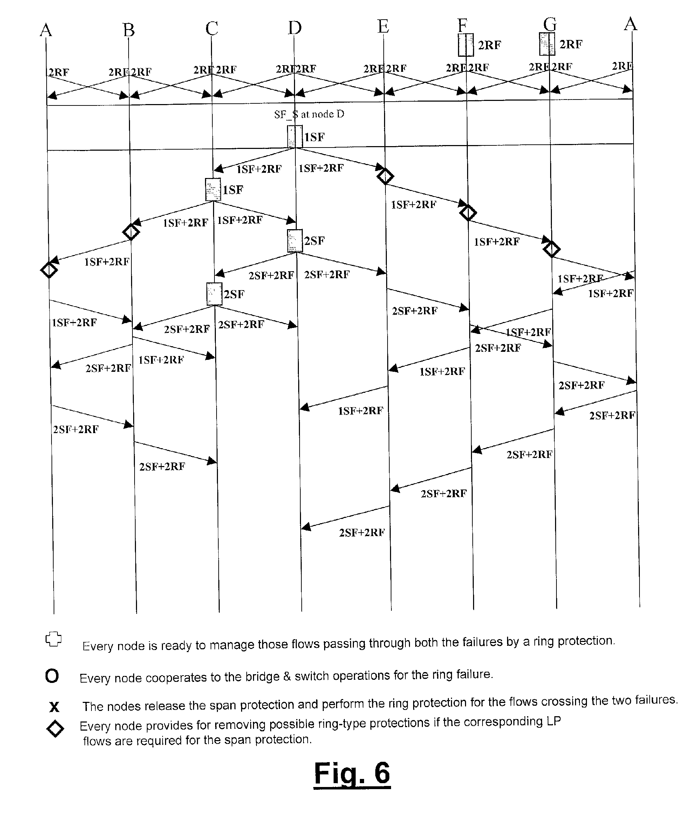

The "fish-bone" graphs (similar to those utilized in the Recommendation ITU-T G. 841) shown in the Figures 5 and 6 illustrate in a schematic manner what happens in a ring network in the case of a further failure, in addition to an already existing failure. In particular, the Fig. 5 considers the occurrence of a ring failure in the presence of a span protection (of higher priority) which is already active on the ring network and the Fig. 6 considers the occurrence of a span failure (of higher priority) in the presence of an active ring protection. In both the situations, a signaling is transmitted in order to allow the coexistence of both the ring and span protections in the ring.

In Fig. 5, suppose to start from a situation of a single span failure between the nodes C and D wherein the various involved nodes have already implemented the necessary bridge and switch actions and signalings of 2SF type (2^{nd} stage of Span Failure) are travelling in the ring network. Firstly, a ring failure (RF) occurs between nodes F and G, initially signalled by the node F through appropriate signalings (2SF+1RF, 2^{nd} stage of Span Failure + 1^{st} stage of Ring Failure). Upon receipt of this signaling by the nodes which are adjacent to the ring failure (nodes F and G), all the other nodes are ready to manage the ring protection for the paths which pass through both the failures. Later, the nodes adjacent to the span failure release the span protection and implement the ring protection for those paths which cross through both the failures. Then, each node implements the bridge and switch actions for the ring failure. At the end of these actions, the nodes which are adjacent to the ring failure transmit signalings which indicate the completion of the ring protection (2SF+2RF, 2^{nd} stage of Span Failure + 2^{nd} stage of Ring Failure).

In Fig. 6, suppose to start from a situation of single ring failure between nodes F and G wherein the various nodes have already performed the necessary bridge and switch actions and signalings of 2RF type (2^{nd} stage of Ring Failure) are travelling in the ring network. A span failure (SF) occurs between the nodes C and D, initially signaled by the node D with appropriate signalings (2RF+1SF, 2^{nd} stage of Ring Failure + 1^{st} stage of Span Failure). Upon receipt this signaling by the nodes which are adjacent to the span failure (nodes C and D), all the other nodes remove the ring protections, if the span protection requires corresponding LP paths. Upon the span protection has been fully performed, the nodes which are adjacent to the ring failure transmit appropriate signalings (2SF+2RF, 2^{nd} stage of Span Failure + 2^{nd} stage of Ring Failure).

The scope of the present invention is extended also to a node or network element which is able to implement the method steps.

The method of the present invention can be implemented both in hardware and in software and therefore the field of the present invention is extended also to a software program for implementing the method and to a memory means wherein the software program is stored.

Although, just for clarity reasons, the present invention has dealt with the situation of ring networks affected by multiple failures, it is evident that the term "failure" has to be understood as comprising pure fiber failures and failures of network elements or their components, but also degradations of signals or commands of the operator which can be totally defined as "events".

For the meaning of the initials and the terminology used in this specification and in the drawings, please refer to the above said Recommendation ITU-T G. 841.

It is clear that the method and the node according to the present invention can be subjected to many modifications, amendments and variations without going out of the scope of protection defined by the following claims which are to be understood as an integral part of the present description.

## Claims

1. Method of managing failures in a ring topology telecommunication network, said ring network comprising network elements and optical fiber spans, said fiber spans connecting the network elements in a closed-ring configuration, each fiber span comprising a plurality of fibers, half of them being for high priority channels (HP), half being for low priority channels (LP), a protected path being installed in said ring network to bring information traffic from a network element to another one by utilizing high priority channels, the method comprising the step of performing a ring type protection in case said protected path becomes affected by a single failure of ring type, **characterized in that** it comprises the further step, implemented before performing the ring type protection, of checking that the low priority channels that are necessary to implement the ring type protection are available, namely that they are not already utilized for implementing another protection and, in case the check is negative, no ring type protection will be performed.

2. Method according to claim 1, **characterized by** comprising the further step of implementing a ring type protection should said path become affected by multiple failures of different type.

3. Method according to the claim 1 or 2, **characterized in that** the active ring type protection is not removed in case of another failure in said path and if the protection channels are still available for implementing such a protection.

4. Method according to any of claims 1 to 3, **characterized by** comprising the step of notifying to each network element a traffic map relating to both the high priority channels and the low priority channels and to the possible presence of failures in the ring network, together with their respective location.

5. Method according to claim 1, 2 or 3, **characterized by** comprising the step, implemented by the network elements in case of a multiple failure of network, of transmitting, receiving and elaborating the signalings relevant to the both contemporary types of different protections, and of modifying the communication protocol for allowing the synchronized evolution of the span switching mechanism, among the network elements which are adjacent to the span failure, and of the ring switching mechanism for all the network elements.

6. Network element for a telecommunications network with a ring topology which comprises a plurality of network elements and optical fiber spans, said fiber span connecting the network elements in a closed-ring configuration, each fiber span comprising four fibers, two for high priority channels (HP) and two for low priority channels (LP), in said ring network a protected path being installed for bringing information traffic from a network element to another one by utilizing the high priority channels, said network element comprising means for realizing a span type protection in case of single span type failure in said path and means for realizing a ring type protection in case of single ring type failure in said path, **characterized by** further comprising means for checking, before performing the ring protection, that the low priority channels which are necessary for the implementation of the ring type protection are available, namely that they are not already utilized for implementing another protection and, in case they are utilized for implementing another protection, no ring type protection is performed.

7. Network element according to claim 6, **characterized by** comprising means for implementing a ring type protection in case of multiple failure of different type in said path.

8. Network element according to either claim 6 or 7, **characterized by** comprising means for storing a map relevant to the traffic on the high priority channels and on the low priority channels and the possible presence of failures in the ring network with the corresponding location.

9. Network element according to either claim 6 or 7, **characterized by** comprising means for transmitting, receiving and elaborating signalings relevant to two contemporaneous types of different protections in case of multiple network failure, the network elements being interconnected through a communication protocol for allowing the synchronized evolution of the span switching mechanism among the network elements which are adjacent to the span failure and of the ring switching mechanism for all the other network elements.

10. Telecommunication network with ring topology, said ring network comprising network elements and optical fiber spans, said fiber spans connecting the network elements in a closed-ring configuration, each fiber span comprising four fibers, two for high priority channels (HP) and two for low priority channels (LP), in the said ring network a protected path being installed to bring information traffic from a network element to another one by utilizing the high priority channels, each network element comprising means for implementing a span type protecion should a single span type failure occurr in said path and means for realizing a ring type protection should a single ring type failure occurr in said path, **characterized in that** each network element further comprises means for checking, before implementing the ring protection, that the low priority channels which are necessary for realizing the ring type protection are available, namely that they are not already utilized to implement another protection and, in case they are utilized to implement another protection, no ring type protection will be carried out.

11. Ring network according to claim 10, **characterized in that** each network element further comprises means for implementing a ring type protection in case of multiple failure of different type in said path.

12. Ring network according to either claim 10 or 11, **characterized in that** each network element comprises means for storing a traffic map for traffic on high priority channels and on low priority channels and the possible presence of failures in the ring network together with their corresponding location.
